# EUROPÄISCHE PATENTANMELDUNG

(11) **EP 1 178 257 A2**
(43) Veröffentlichungstag der Anmeldung: **06.02.2002**
(21) Anmeldenummer: 01890223.9
(22) Anmeldetag: 01.08.2001
(51) Int. Cl.: F16L 47/00

(54) **Anordnung zum Befestigen von an Rohrenden angebrachten Anschlussstücken**

(30) Priorität: 01.08.2000 AT 5652000 U
(71) Anmelder: Polysan Handelsgesellschaft m.b.H., 3500 Krems (AT)
(72) Erfinder: Ott, Karl, 3541 Priel 3 (AT)
(74) Vertreter: Itze, Peter, Dipl.-Ing.

(57) **Zusammenfassung**

Die Erfindung betrifft eine Anordnung zum Befestigen von an Rohrenden angebrachten Anschlußstücken für sanitäre Armaturen an Wandausnehmungen, Massivwänden bzw. Wandplatten, insbesondere Leichtbauplatten, wobei eine mit der Wand der Wandplatte (8) bzw. deren tragender Unterkonstruktion verbindbare Halteplatte (17) vorgesehen ist, die eine Öffnung zum Durchstecken des freien Endes des Anschlußstückes (1) aufweist, und wobei die Öffnung einen unrunden Querschnitt aufweist, welcher in Form und Größe dem Quer- schnitt des durch die Halteplatte (17) hindurchsteckbaren Bereiches (5) des freien Endes des Anschlußstückes (1) entspricht, und wobei das freie Ende in seiner durchgesteckten Lage in der Halteplatte (17) festlegbar ist.

## Beschreibung

Die Erfindung betrifft eine Anordnung zum Befestigen von an Rohrenden angebrachten Anschlußstücken für sanitäre Armaturen an Wandausnehmeungen, Massivwänden bzw. Wandplatten, insbesondere Leichtbauplatten.

Bei der nunmehr immer mehr üblichen Verwendung von weichen bzw. biegbaren Rohren für die Erstellung von sanitären Leitungen müssen die Anschlußstellen der Rohre an den Anschlußstücken möglichst frei von mechanischen Belastungen sein, da z.B. bei Kupferrohren diese mit den Anschlußstücken weich verlötet werden bzw. bei der Verwendung von Kunststoffrohren diese mit den Anschlußstücken verschweißt, verklebt oder gesteckt werden. Wenn nun in diese Anschlußstücke die Fittings der sanitären Armaturen eingeschraubt werden, dann werden die Anschlußstücke auf Verdrehung beansprucht, da die Fittings üblicherweise mit Hanf oder Dichtbändern in den Gewinden der Anschlußstücke einzudichten sind. Bisher konnten die mechanischen Beanspruchungen, die beim Einschrauben der Fittings in die Anschlußstücke auftreten, insoferne außer Acht gelassen werden, als die Anschlußstücke und mit ihnen die Verbindung zum Zuleitungsrohr in der Wand durch den Verputz festgelegt sind, sodaß der Verbindungsbereich zwischen Anschlußstück und Rohr von dem Verputz bzw. dem Haltegips festgehalten ist.

Bei den neuen Bauformen, insbesondere bei Leichtbauweise, z.B. mit Gipskarton- platten u.dgl., liegen die Anschlußstücke bzw. die Verbindungsstücke zwischen den Rohren und dem Anschlußstück in der Wand in der Regel frei bzw. sind sie frei hinter einer Montageplatte geordnet, sodaß bei Einschrauben der Fittinge nicht unerhebliche Kräfte im Bereich der Verbindung zwischen Anschlußstück und Rohrende auftreten, da sich die Anschlußstücke mit den Fittingen beim Einschrauben zu verdrehen versuchen, an den entsprechenden Platten aber keinen Halt finden, was zu Biege- und Drehbeanspruchungen der Verbindungen zwischen Rohrende und Anschlußstück führt.

Um die Verbindung von Rohrende und Anschlußstück von solchen Beanspruchungen bzw. Belastungen frei zu halten, wurde gemäß CH 675 902 A5 bereits vorgeschlagen, an einem Teil des Mantels, u.zw. in vorliegendem Fall an einem hintere dem Aufschraub- gewinde vorgesehenen hinterschnittenen Bereich, einen prismatischen Abschnitt mit sechseckigem Querschnitt vorzusehen, um einen Schlüssel zum Gegenhalten ansetzen zu können. Eine solche Ausbildung hat allerdings den Nachteil, daß dieser Sechskant durch die Bauplatte bzw. durch eine Rosette od.dgl. abgedeckt sein kann, sodaß z.B. zum Lösen eines Armaturanschlusses ein Gegenhalten nicht mehr möglich ist, was insbesondere dann nachteilig ist, wenn die Verbindung zwischen Anschlußstück und Armatur schon längere Zeit besteht und genutzt wird, sodaß ein gewisses "Verkleben" der Armaturfittinge mit dem Anschlußstück erfolgt.

Der Erfindung liegt nun die Aufgabe zugrunde, eine Anordnung der eingangs genannten Art zu schaffen, mit welcher die auf die Anschlußstücke ausgeübten Kräfte beim Ein- oder Ausschrauben von Armaturenfittingen von den Verbindungen zwischen Anschlußstück und Rohrende ferngehalten werden können, ohne daß durch Schlüssel od.dgl. gegengehalten werden muß bzw. ohne daß das Anschlußstück durch Verputz od.dgl. festgehalten wird.

Dies wird gemäß vorliegender Erfindung dadurch erreicht, daß eine mit der Wand, der Wandplatte bzw. deren tragender Unterkonstruktion verbindbare Halteplatte vorgesehen ist, die eine Öffnung zum Durchstecken des freien Endes des Anschlußstückes aufweist, wobei die Öffnung einen unrunden Querschnitt aufweist, welcher in Form und Größe dem Querschnitt des durch die Halteplatte hindurchsteckbaren Bereiches des freien Endes des Anschlußstückes entspricht, und und wobei das freie Ende in seiner durchgesteckten Lage in der Halteplatte festlegbar ist. Es werden damit die Kräfte vom Anschlußstück auf die Halte- platte übertragen, welche ihrerseits großflächig die Kräfte auf die Wandplatte bzw. die diese tragende Unterkonstruktion verteilt.

Vorteilhafterweise kann an dem Anschlußstück eine radial nach außen vorspringende, vorzugsweise umlaufende Schulter zur Anlage an der Rückseite der Halteplatte vorgesehen sein, wobei auf das durch die Öffnung hindurchragende freie Ende eine Klemmutter zum Festlegen des Anschlußstückes an der Halteplatte aufschraubbar ist. Damit wird ein sicheres Anlegen des Anschlußstückes an der Halteplatte erzielt.

Weiters kann der durch die Öffnung der Halteplatte hindurchsteckbare Bereich des An- schlußstückes einen regelmäßig polygonalen, vorzugsweise 6- oder 8-eckigen Querschnitt aufweisen, wobei die Kanten des solcherart gebildeten Prismas die Gewindenuten für das Aufschrauben der Klemmutter aufweisen, wodurch erzielt wird, daß das Anschlußstück in mehreren Stellungen an der Halteplatte festlegbar ist, wobei sich sechs- oder achteckige Querschnitte insofern als besonders bevorzugt herausgestellt haben, weil dabei einerseits eine genügende Zahl von Drehlagen und anderseits eine genügend scharfe Ausbildung der Kanten vorhanden ist, um das Verdrehen zu sichern.

Schließlich kann zur Festlegung des freien Endes des Anschlußstückes eine Bajonett-, Steck- oder Schnappkupplung vorgehen sein, wodurch eine rasche und sichere Festlegung erzielbar ist.

In der Zeichnung ist ein Ausführungsbeispiel des Erfindungsgegenstandes dargestellt.

Fig. 1 zeigt einen Axialschnitt durch das Anschlußstück mit eingesetztem Rohrende, wobei das Anschlußstück in der Halteplatte verschraubt ist. Die linke Seite zeigt dabei eine Überwurfmutter und die rechte Seite eine normale Scheibenmutter.

Fig. 2 ist eine Draufsicht auf die Ausbildung gemäß Fig. 1.

Fig. 3 veranschaulicht eine Halteplatte für drei in bestimmtem Abstand zueinander festlegbare Anschlußstücke.

Fig. 4 zeigt eine andere Ausführungs- variante, wobei im linken Teil ein Anschlußstück, welches aus einem Verbund aus Kunststoff und Metall besteht, wiedergegeben ist und im rechten Teil ein ganz aus Metall gefertigtes Anschlußstück, in welches das Rohrende mit einer O-Ringdichtung eingesteckt ist.

Fig. 5 veranschaulicht wieder eine Draufsicht auf die beiden Ausführungsformen.

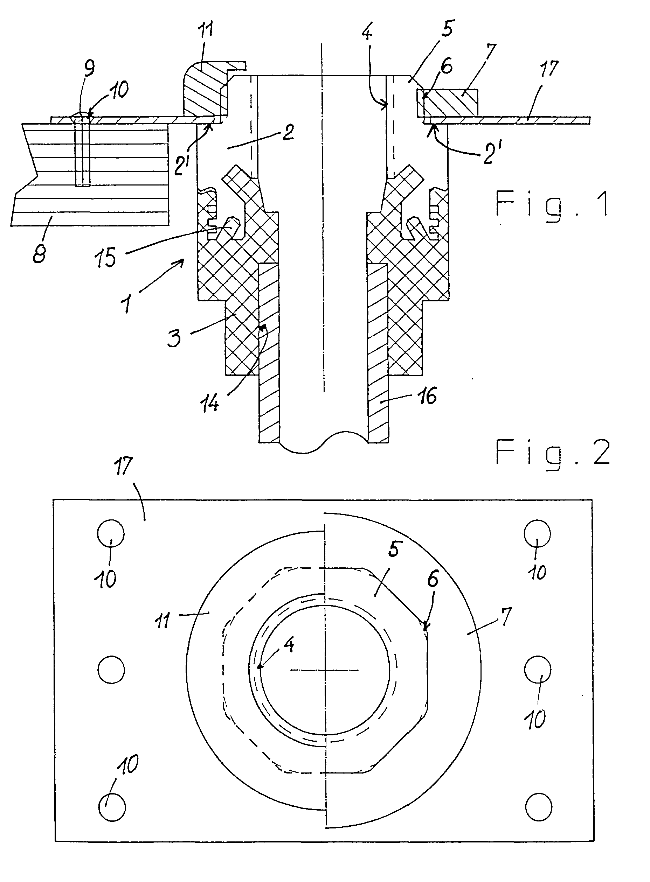

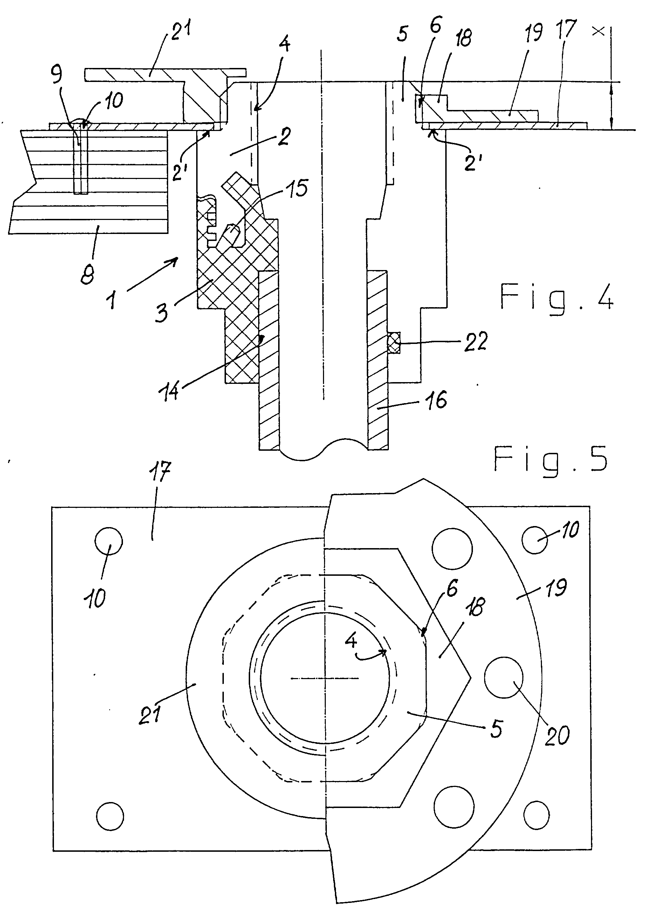

Mit 1 ist durchgehend ein Anschlußstück bezeichnet, welches beispielsweise aus einem Metallteil 2 gefertigt ist, der im Spritzgußverfahren in einen Kunststoffteil 3 ein-gebettet ist. Mit 15 ist der Verbindungsbereich zwischen dem Metallteil 2 und dem Kunststoff 3 bezeichnet, wobei vorliegend eine Labyrinthverbindung vorgesehen ist. Derartige Anschluß- stücke dienen als Verbindung zwischen Rohrleitung und den nicht dargestellten Armaturen, z.B. für flüssige Medien. Dieses Anschlußstück weist an der zum Einschrauben der Armatur vorgesehenen Seite ein Innengewinde 4 und eine Verdrehschutzeinrichtung 5 auf, welche im vorliegenden Fall dadurch erreicht wird, daß dieser Teil unrunden Querschnitt aufweist und durch eine Halteplatte 17 hindurchgesteckt ist, wobei die Öffnung, durch die das Anschluß- stück mit dem unrunden Bereich hindurchgreift, in Form und Größe an die Außenab- messungen dieses unrunden Bereiches 5 des Anschlußstückes 1 angepaßt ist. Im vorliegenden Fall ist, wie aus den Fig. 2 und 5 ersichtlich, der unrunde Querschnitt durch ein regelmäßiges Achteck gegeben, wobei die Längskanten dieses achteckigen Prismas ein Außengewinde aufweisen, das nur geringfügig in die abgeflachten Bereiche des achteckigen Prismas hineinragt. Dieses Außengewinde 6 dient zum Aufschrauben einer Überwurfmutter 7 (siehe Fig. 1, linker Teil) oder einer Scheibenmutter 11 (siehe Fig. 1, rechter Teil). Der mit dem unrunden Bereich 5 versehene Metallteil 2 weist am Ende des Gewindes eine umlaufende Schulter 2' auf, mittels welcher das Anschlußstück an der Rückseite der Halteplatte 17 in Anlage gebracht und damit festlegbar ist. Die Halteplatte ihrerseits weist Bohrungen 10 auf, mittels welcher die z.B. über Schrauben 9 an einer Wandplatte 8 oder den tragenden Bereichen derselben befestigbar ist. Bei dieser Ausführungsvariante ist in der rechten Seite die Flachmutter so angeordnet, daß sie mit dem Bund unter den Fliesen eingebunden werden kann. Sie kann dabei einen abgesetzten Bereich 18 aufweisen, mit welchem die Mutter verdreht werden kann, z.B. wie einen Sechskantschlüssel. Mit 20 sind im Bund 19 vorgesehene Bohrungen angedeutet, mit welchen alternativ zum Sechskant die Mutter, z.B. mittels handelsüblicher Stiftschlüssel angezogen werden kann. Die in Fig. 4 und 5 links wiedergegebene Ausführungsvariante zeigt eine Sichtverschraubung, bei welcher durch den abgesetzten Bund der Mutter 21 auch die Fliesen zu den Fugen überbrückt werden können.

Beim Ausführungsbeispiel gemäß Fig. 4 und 5 sind die Muttern als Flachmutter 18 mit einem Bund 19 ausgebildet (siehe Fig. 4 und 5, rechte Seite) bzw. kann die Befestigungsmutter auch als Sichtverschraubung 21 ausgebildet sein (siehe Fig. 4 und 5, linke Seite).

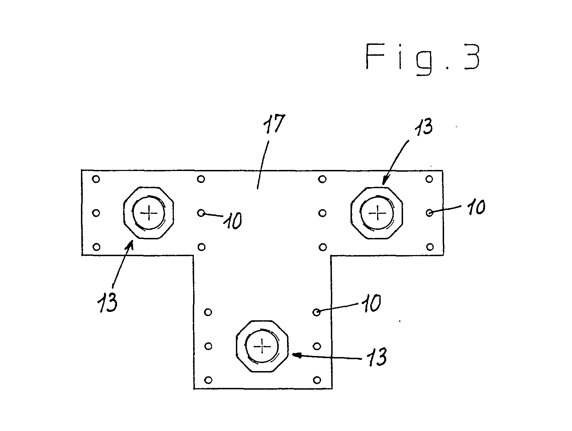

Fig. 3 zeigt eine Halteplatte 17 für drei Anschlußstücke in Vorderansicht, wobei mit 13 die Anschlüsse für die Sanitärarmaturen angedeutet sind.

An der Rückseite der Anschlußstücke ist in den Kunststoffteil 3 das Ende 16 einer Rohrleitung einsetzbar, wobei in dem Kunststoffteil eine Ausnehmung 14 vorgesehen ist, die umlaufend zylindrisch ausgebildet ist und der Wandstärke des einzusetzenden Rohrendes entspricht, um solcherart einen freien Durchgang des Inneren der Rohrleitung zum Anschlußstück zu ergeben. Das Ende 16 der Rohrleitung kann dabei in die Ausnehmung 14 entweder eingeschweißt, eingeklebt, eingeschraubt oder über spezielle Dichtungen 22 nur eingesteckt sein.

Anstelle der in der Zeichnung wiedergegebenen Festlegung des Anschlußstückes in der Halteplatte mittels eines Gewindes können auch Bajonettverbindungen oder Keilspangen vorgesehen sein.

Die Reihenfolge der Montage ist den Örtlichkeiten entsprechend zu wählen, wobei es in manchen Fällen angezeigt sein kann, zunächst die Halteplatte 17 am Untergrund 8 mittels der Schrauben 9 zu befestigen und erst dann von der Rückseite her das Anschlußstück einzusetzen und zu verschrauben, wonach dann nach Festlegen des Anschlußstückes in der Halteplatte das Rohrende 16 eingesetzt werden kann. Wie schon angeführt, ist diese Reihenfolge jedoch beliebig abänderbar.

## Patentansprüche

1. Anordnung zum Befestigen von an Rohrenden angebrachten Anschlußstücken für sanitäre Armaturen an Wandausnehmungen, Massivwänden bzw. Wandplatten, insbesondere Leichtbauplatten, **dadurch gekennzeichnet, daß** eine mit der Wand, der Wandplatte (8) bzw. deren tragender Unterkonstruktion verbindbare Halteplatte (17) vorgesehen ist, die eine Öffnung zum Durchstecken des freien Endes des Anschlußstückes (1) aufweist, wobei die Öffnung einen unrunden Querschnitt aufweist, welcher in Form und Größe dem Querschnitt des durch die Halteplatte (17) hindurchsteckbaren Bereiches (5) des freien Endes des Anschlußstückes (1) entspricht, und wobei das freie Ende in seiner durchgesteckten Lage in der Halteplatte (17) festlegbar ist.

2. Anordnung nach Anspruch 1, **dadurch gekennzeichnet, daß** an dem Anschlußstück (1) eine radial nach außen vorspringende, vorzugsweise umlaufende Schulter (2') zur Anlage an der Rückseite der Halteplatte (17) vorgesehen ist, wobei auf das durch die Öffnung hindurchragende freie Ende (5) eine Klemmutter (7; 11; 18, 19; 21) zum Festlegen des Anschlußstückes (1) an der Halteplatte (17) aufschraubbar ist.

3. Anordnung nach Anspruch 2, **dadurch gekennzeichnet, daß** der durch die Öffnung der Halteplatte (17) hindurchsteckbare Bereich (5) des Anschlußstückes (1) einen regelmäßig polygonalen, vorzugsweise 6- oder 8-eckigen Querschnitt aufweist, wobei die Kanten des solcherart gebildeten Prismas die Gewindenuten (6) für das Aufschrauben der Klemmutter (7; 11; 18, 19; 21) aufweisen.

4. Anordnung nach Anspruch 1, **dadurch gekennzeichnet, daß** zur Festlegung des freien Endes (5) des Anschlußstückes (1) eine Bajonett-, Steck- oder Schnappkupplung vorgehen ist.
